# EUROPEAN PATENT APPLICATION

(11) **EP 4 362 213 A1**
(43) Date of publication of application: **01.05.2024**
(21) Application number: 21946393.2
(22) Date of filing: 23.06.2021
(51) Int. Cl.: H01M 50/586, H01M 4/13

(54) **ELECTROCHEMICAL DEVICE AND ELECTRONIC DEVICE**

(71) Applicant: Ningde Amperex Technology Ltd., Ningde, Fujian 352106 (CN)
(72) Inventor: LI, Xuecheng, Ningde City, Fujian Province 352100 (CN)
(74) Representative: Icosa
(86) International application number: PCT/CN2021/101875
(87) International publication number: WO 2022/266893

(57) **Abstract**

This application provides an electrochemical device and an electronic device. The electrochemical device includes an electrode assembly. The electrode assembly includes a first electrode plate. The first electrode plate includes a first current collector, a first active material layer, and a first insulation layer. The first current collector includes a first surface and a second surface that are disposed opposite to each other. The first active material layer is disposed on the first surface. The first insulation layer is located between the first current collector and the first active material layer. In the electrochemical device and the electronic device according to this application, the insulation layer is disposed between the current collector and the active material layer to block up an electronic channel in this region. Even if the positive electrode plate contacts the negative electrode plate due to shrinkage of the separator, no short circuit occurs because the electrode plates in the insulation layer region are deenergized, thereby alleviating the problem of voltage drop failure. In addition, the electrical performance of the electrochemical device and the electronic device is not affected because the electrolyte content of the electrochemical device according to this application is not reduced.

## Description

### TECHNICAL FIELD

This application relates to the technical field of electrochemistry, and in particular, to an electrochemical device and an electronic device.

### BACKGROUND

The advent of the 5G era requires a higher capacity and faster charging of batteries, which requires a battery to have a higher electrolyte content. The increase in the electrolyte content in the battery increases hazards of failure caused by dropping of the battery. Voltage drop failure is the most common type of failure caused by dropping of the battery, and is the trickiest type of failure. The voltage drop failure is caused by contact and a short circuit between a positive electrode plate and a negative electrode plate at a shrunk position of a separator, where the separator at the head part and end part of an electrode assembly shrinks after being impacted by an electrolytic solution when the electrode assembly drifts in an accommodation device (such as aluminum plastic film) due to dropping of the battery.

To solve the foregoing problems, one method is to suppress the shrinkage of the separator by increasing a bonding force of the separator, so as to suppress the voltage drop failure. However, the increase of the bonding force of the separator leads to deterioration of electrical performance of the battery. Especially, in a high-rate fast charge system (for example, a charging system in which a charge rate is not less than 3 C), the deterioration is more evident. Another method is to reduce the impact of free electrolytic solution on the separator by reducing the electrolyte content in the battery. However, the excessively low electrolyte content affects later cycles of the battery, accelerates aging of the battery, and reduces the service life. Therefore, it is necessary to provide a design to solve such problems.

### SUMMARY

In view of the fact above, it is necessary to provide an electrochemical device to alleviate the problem of voltage drop failure without affecting the electrical performance.

In addition, an electronic device is provided.

According to a first aspect of this application, an electrochemical device is provided, including an electrode assembly. The electrode assembly includes a first electrode plate, a second electrode plate, and a separator located between the first electrode plate and the second electrode plate. The first electrode plate includes a first current collector, a first active material layer, and a first insulation layer. The first current collector includes a first surface and a second surface that are disposed opposite to each other. The first active material layer is disposed on the first surface. The first insulation layer is located between the first current collector and the first active material layer.

The current collector is overlaid with the insulation layer first, and then coated with the active material layer. The insulation layer can prevent electrons in this region from flowing from the current collector to the active material layer, thereby deenergizing the electrode plates in the region. This can prevent a short circuit caused by contact between the positive electrode plate and the negative electrode plate at the head part and the end part of the outermost coil of the battery when the separator shrinks upon dropping of the battery, thereby mitigating the hazards of voltage drop failure caused by the dropping. If the current collector is coated with the active material layer first and then the active material layer is overlaid with the insulation layer, the active material layer contacts the current collector, and the active material layer can still gain and lose electrons normally and perform lithium intercalation and deintercalation. In this case, the electrode plate in this region is in an energized state. When the insulation layer disposed on the active material layer is too thin or not applied, the hazard of contact and short circuits between the positive electrode plate and the negative electrode plate still exists. In addition, an interfacial bonding force between the active material layer and the current collector is weaker than the interfacial bonding force between the insulation layer and the current collector. When being dropped, an electrochemical device with a current collector overlaid with the active material layer first and then coated with the insulation layer is prone to detachment of the active material layer and exposure of the current collector, thereby short-circuiting the positive electrode plate and the negative electrode plate, generating heat rapidly, incurring a voltage drop, and deteriorating the safety performance. Therefore, the current collector needs to be overlaid with the insulation layer first and then coated with the active material layer to alleviate the problem of voltage drop failure. Moreover, this technical solution avoids reducing the electrolyte content, and avoids affecting the electrical performance of the electrochemical device.

In some embodiments, the electrode assembly is formed by winding the first electrode plate, the second electrode plate, and the separator. The first surface is disposed toward a winding center, and the second surface is disposed away from the winding center.

In some embodiments, the electrochemical device further includes a second active material layer disposed on the second surface. The first current collector includes a first region and a second region that are disposed along a length direction of the electrode plate. The first active material layer is disposed on the first surface of the first region and the first surface of the second region. The second active material layer is disposed on the second surface of the first region.

In some embodiments, the electrochemical device further includes a tab electrically connected to the first current collector. The first current collector includes a first end and a second end that are disposed along a width direction of the electrode plate. The tab is disposed at the first end. The second region of the first current collector includes a first part and a second part that are disposed along the length direction of the electrode plate. The first part includes a first end of the first part and a second end of the first part that are disposed along the width direction of the electrode plate. The second part includes a first end of the second part and a second end of the second part that are disposed along the width direction of the electrode plate. The first insulation layer is at least disposed on at least one of the first end of the first part, the second end of the first part, the first end of the second part, or the second end of the second part. Generally, the hazard of voltage drop failure is relatively high at the first end of the first part, the second end of the first part, the first end of the second part, or the second end of the second part when the separator shrinks. The first insulation layer disposed at such positions can more effectively prevent the hazard of voltage drop failure and improve the safety performance of the electrochemical device.

In some embodiments, the electrochemical device further includes an accommodation device that accommodates the electrode assembly. The accommodation device includes a first accommodation portion and a second accommodation portion. A depth of the first accommodation portion is less than a depth of the second accommodation portion. When accommodated in the accommodation device, the first part is accommodated in at least the first accommodation portion, and the second part is accommodated in the second accommodation portion.

In some embodiments, the first insulation layer is disposed at the first end of the first part and the second end of the first part. The hazard of voltage drop failure is relatively high at the first end of the first part or the second end of the first part when the separator shrinks. The first insulation layer disposed at the first end of the first part and the second end of the first part can more effectively prevent the hazard of voltage drop failure and improve the safety performance of the electrochemical device.

In some embodiments, the first insulation layer is disposed at the first end of the second part and the second end of the second part. The hazard of voltage drop failure is relatively high at the first end of the second part or the second end of the second part when the separator shrinks. The first insulation layer disposed at the first end of the second part and the second end of the second part can more effectively prevent the hazard of voltage drop failure and improve the safety performance of the electrochemical device.

In some embodiments, the first insulation layer is disposed at the first end of the first part, the second end of the first part, the first end of the second part, and the second end of the second part. The hazard of voltage drop failure is relatively high at the first end of the first part, the second end of the first part, the first end of the second part, or the second end of the second part when the separator shrinks. The first insulation layer disposed at such positions can more effectively prevent the hazard of voltage drop failure and improve the safety performance of the electrochemical device.

In some embodiments, an extension length of the first insulation layer along a width direction of the electrode plate is not greater than 10 mm. The larger the extension length of the first insulation layer along the width direction of the electrode plate, the more effectively the voltage drop failure can be prevented. However, the first insulation layer occupies an internal space of the electrode assembly, thereby reducing the energy density of the electrode assembly. As found by the applicant of this application in experiments, when the extension length of the first insulation layer falls within the range of 2 mm to 10 mm, the hazard of voltage drop failure can be effectively prevented (for example, by 90% or more), and the impact on the energy density of the electrode assembly is within an acceptable range.

In some embodiments, the first insulation layer includes a first insulation material, and the first insulation material includes at least one of aluminum oxide, zirconium oxide, or chrome oxide.

In some embodiments, the first electrode plate is a positive electrode plate, and the second electrode plate includes a second current collector. Along a width direction of the electrode plate, an extension length of the first current collector is less than an extension length of the second current collector. Understandably, when the extension length of the first current collector along the width direction of the electrode plate is substantially equal to the extension length of the second current collector along the width direction of the electrode plate, the edge of the first current collector along the width direction of the electrode plate almost coincides with the edge of the second current collector along the width direction of the electrode plate. This means that when a shrinkage distance of the separator is greater than the extension length of the insulation layer along the width direction of the electrode plate, the edge of the first current collector may contact the edge of the second current collector, thereby causing voltage drop failure of the electrode assembly. When the extension length of the first current collector along the width direction of the electrode plate is substantially less than the extension length of the second current collector along the width direction of the electrode plate, the edge of the first current collector cannot contact the second electrode plate to cause voltage drop failure of the electrode assembly unless the following condition is satisfied: the shrinkage distance of the separator is not less than a sum of the width of the insulation layer and a difference between the width of the first current collector and the width of the second current collector. Evidently, the hazard of voltage drop failure can be prevented more effectively by letting the extension length of the first current collector along the width direction of the electrode plate be less than the extension length of the second current collector along the width direction of the electrode plate.

In some embodiments, the electrochemical device further includes a second insulation layer disposed on the second surface. The second region includes a first part and a second part that are disposed along the length direction of the electrode plate. The second insulation layer is at least disposed in at least one of the first part or the second part. With the second insulation layer disposed on the second surface, when the separator close to the second surface shrinks, the second insulation layer can prevent transmission of electrons between the first electrode plate and the second electrode plate. No short circuit occurs even if the first electrode plate contacts the second electrode plate, thereby improving the safety performance of the electrochemical device.

In some embodiments, the first current collector further includes a third region. The first region, the second region, and the third region are disposed along the length direction of the electrode plate. The second insulation layer is further disposed in the third region. Generally, the hazard of voltage drop failure is relatively high at the first part, the second part, or the third region when the separator shrinks. The second insulation layer disposed at such positions can more effectively prevent the voltage drop failure and improve the safety performance of the electrochemical device.

In some embodiments, the second insulation layer includes a second insulation material. The second insulation material includes at least one of aluminum oxide, zirconium oxide, or chrome oxide.

In some embodiments, a ratio of an extension length of the second insulation layer along the width direction of the electrode plate to an extension length of the first current collector along the width direction of the electrode plate is not less than 50%.

In some embodiments, the electrode assembly is formed by stacking the first electrode plate, the second electrode plate, and the separator along a first direction. The first current collector includes a first end and a second end that are disposed along a second direction, and a third end and a fourth end that are disposed along a third direction. The second direction is perpendicular to the first direction, the third direction is perpendicular to the second direction, and the first insulation layer is disposed on at least one of the first end, the second end, the third end, or the fourth end. Understandably, the hazard of voltage drop failure is relatively high at the first end, the second end, the third end, or the fourth end in the stacked electrode assembly when the separator shrinks. The first insulation layer disposed at such positions can more effectively prevent the hazard of voltage drop failure and improve the safety performance of the electrochemical device.

In some embodiments, an extension length of the first insulation layer along the second direction is not greater than 10 mm. Such settings can prevent the hazard of voltage drop failure effectively while bringing an insignificant impact on the energy density of the electrode assembly.

In some embodiments, the electrochemical device further includes a second insulation layer disposed on the second surface. The second insulation layer is disposed on at least one of the first end, the second end, the third end, or the fourth end. The second insulation layer further disposed can prevent voltage drop failure more effectively and improve the safety performance of the electrochemical device.

In some embodiments, the extension length of the second insulation layer along the second direction is not greater than 10 mm. Such settings can prevent the hazard of voltage drop failure effectively while bringing an insignificant impact on the energy density of the electrode assembly.

This application further provides an electronic device. The electronic device includes the electrochemical device described above, and the electrochemical device supplies power to the electronic device.

In the electrochemical device and the electronic device according to this application, the insulation layer is disposed between the current collector and the active material layer to block up an electronic channel in this region. Even if the positive electrode plate contacts the negative electrode plate due to shrinkage of the separator, no short circuit occurs because the electrode plates in the insulation layer region are deenergized, thereby alleviating the problem of voltage drop failure. In addition, the electrical performance of the electrochemical device and the electronic device is not affected because the electrolyte content of the electrochemical device according to this application is not reduced.

### BRIEF DESCRIPTION OF DRAWINGS

The following describes this application in more detail with reference to drawings and specific embodiments.
FIG. 1 is a schematic structural diagram of an electrochemical device according to an embodiment of this application;
FIG. 2 is a schematic structural diagram of a first current collector according to an embodiment of this application;
FIG. 3 is a schematic structural diagram of an accommodation device according to an embodiment of this application;
FIG. 4a is a schematic structural diagram of a first electrode plate according to an embodiment of this application;
FIG. 4b is a schematic structural diagram of the first electrode plate shown in FIG. 4a and coated with an active material layer;
FIG. 5a is a schematic structural diagram of a first electrode plate according to an embodiment of this application;
FIG. 5b is a schematic structural diagram of the first electrode plate shown in FIG. 5a and coated with an active material layer;
FIG. 6 is a schematic structural diagram of an electrochemical device according to an embodiment of this application;
FIG. 7a is a schematic structural diagram of a first electrode plate according to an embodiment of this application;
FIG. 7b is a schematic structural diagram of the first electrode plate shown in FIG. 7a and coated with an active material layer;
FIG. 8 is a schematic structural diagram of an electrochemical device according to an embodiment of this application;
FIG. 9a is a schematic structural diagram of a first electrode plate according to an embodiment of this application;
FIG. 9b is a schematic structural diagram of the first electrode plate shown in FIG. 9a and coated with an active material layer;
FIG. 10 is a schematic structural diagram of an electrochemical device according to an embodiment of this application;
FIG. 11a is a schematic structural diagram of a first electrode plate according to an embodiment of this application;
FIG. 11b is a schematic structural diagram of the first electrode plate shown in FIG. 11a and coated with an active material layer; and
FIG. 12 is a schematic structural diagram of an electrochemical device according to an embodiment of this application;
FIG. 13a is a schematic structural diagram of a first electrode plate according to an embodiment of this application;
FIG. 13b is a schematic structural diagram of the first electrode plate shown in FIG. 13a and coated with an active material layer;
FIG. 14 is a schematic structural diagram of an electrochemical device according to an embodiment of this application;
FIG. 15 is a schematic structural diagram of an electrochemical device according to an embodiment of this application;
FIG. 16 is a schematic structural diagram of a first current collector according to an embodiment of this application;
FIG. 17a is a schematic structural diagram of a first electrode plate according to an embodiment of this application;
FIG. 17b is a schematic structural diagram of the first electrode plate shown in FIG. 17a and coated with an active material layer; and
FIG. 18 is an enlarged view of a part A shown in FIG. 15.

### Reference numerals:

Electrochemical device 100
Electrode assembly 10
Tab 30
Accommodation device 50
First accommodation portion 51
Second accommodation portion 52
First electrode plate 101
Second electrode plate 103
Separator 105
First current collector 1011
First surface 1012
Second surface 1014
First active material layer 1013
First insulation layer 1015
Second active material layer 1017
Second insulation layer 1019
First region 102
Second region 104
Third region 106
First end 1016
Second end 1018
Third end 1020
Fourth end 1022
First part 1041
Second part 1042
First end of the first part 1043
Second end of the first part 1044
First end of the second part 1045
Second end of the second part 1046
Length direction of the electrode plate X
Width direction of the electrode plate Y
Thickness direction Z
First direction Z'
Second direction X'
Third direction Y'

The following further describes the embodiments of this application with reference to the drawings.

### DETAILED DESCRIPTION OF EMBODIMENTS

Unless otherwise defined, all technical and scientific terms used herein have the same meanings as usually understood by a person skilled in the technical field of this application. The terms used herein are merely intended to describe specific embodiments but not to limit the embodiments of this application.

It needs to be noted that all directional indicators (for example, up, down, left, right, front, back, and so on) in the embodiments of this application are merely used to explain a relative position relationship, movement state and the like between components in a specific posture (as shown in the drawings). When the specific posture changes, the directional indicators change accordingly.

It is to be understood that, when a layer is referred to as being "on" another layer, it may be directly on the other layer, or may be interspaced with an intermediate layer in between. By contrast, when a layer is referred to as being "directly on" another layer, there is no intermediate layer.

With respect to the terms "greater than" and "less than" used in this application, it is to be understood that, unless otherwise specified, the terms "greater than" and "less than" in this application mean "substantially greater than" and "substantially less than" respectively. In comparing the magnitude between one object (a first object) and another object (a second object), there are calculation and measurement errors, and there are errors caused by processes (for example, unevenness of a coating layer caused by a coating process). For example, the error may be within ±2%. To eliminate the effect of such error, it is defined herein that, so long as a ratio of a difference between the first object and the second object to the second object is greater than 5%, the first object is different from the second object not because of the error, but because the first object is substantially greater than or less than the second object. Understandably, depending on the actual situation, the ratio may be adjusted to 10%, 15%, 20%, and the like.

In addition, the terms such as "first" and "second" used herein are merely intended for ease of description, but not understood as indicating or implying priority or implicitly specifying the number of technical features mentioned. Therefore, a feature qualified by "first" or "second" may explicitly or implicitly include at least one such feature. In the description of this application, unless otherwise expressly specified, "a plurality of" means at least two, for example, two, three, or more.

According to the technical solution of this application, the safety performance of a battery is improved by disposing an insulation layer on at least one of a positive electrode plate or a negative electrode plate of a battery, and disposing the insulation layer between a current collector and an active material layer.

The insulation layer is disposed in a specific region of the electrode plate. By disposing the insulation layer between the current collector and the active material layer, the insulation layer can prevent electrons from flowing from the current collector in this region to the active material layer in this region. The electrode plate in this region is insulated as a whole. This can prevent a short circuit caused by contact between the positive electrode plate and the negative electrode plate when the separator shrinks upon dropping of the battery, thereby mitigating the hazards of voltage drop failure caused by the dropping. If the current collector is coated with the active material layer and then the active material layer is overlaid with the insulation layer, the active material layer contacts the current collector, and the active material layer can still gain and lose electrons normally and perform lithium intercalation and deintercalation. In this case, the electrode plate in this region is in an energized state. When the insulation layer disposed on the active material layer is too thin or not applied, the hazard of contact and short circuits between the positive electrode plate and the negative electrode plate still exists. In addition, an interfacial bonding force between the active material layer and the current collector is weaker than the interfacial bonding force between the insulation layer and the current collector. When being dropped, an electrochemical device with a current collector coated with the active material layer first and then overlaid with the insulation layer is prone to detachment of the active material layer and exposure of the current collector, thereby short-circuiting the positive electrode plate and the negative electrode plate, generating heat rapidly, incurring a voltage drop, and deteriorating the safety performance. Therefore, the current collector needs to be coated with the insulation layer directly and then coated with the active material layer to alleviate the problem of voltage drop failure. Moreover, this technical solution avoids reducing the electrolyte content, and ensures the electrical performance of the electrochemical device.

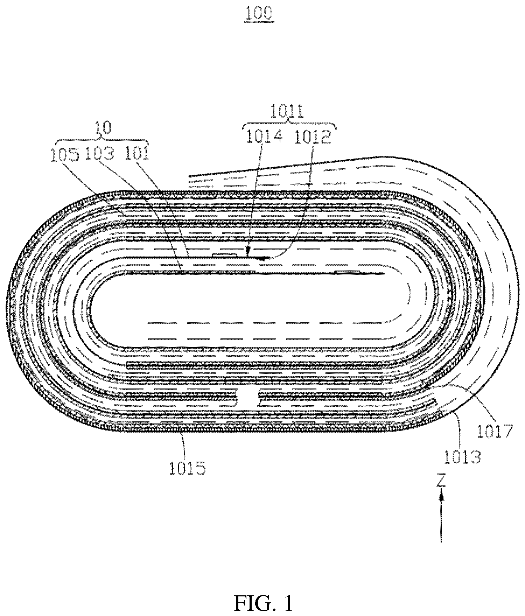

Referring to FIG. 1, this application provides an electrochemical device 100, including an electrode assembly 10. A direction Z shown in the drawing is a thickness direction of the electrode assembly 10. The electrochemical device 100 may be, but is not limited to, a battery, for example, a secondary battery (such as a lithiumion secondary battery, a sodium-ion battery, a magnesium-ion battery), or a primary battery (such as a lithium primary battery). The electrochemical device 100 may include an electrode assembly 10 and an electrolyte.

The electrode assembly 10 includes a first electrode plate 101, a second electrode plate 103, and a separator 105 located between the first electrode plate 101 and the second electrode plate 103. The first electrode plate 101 includes a first current collector 1011, a first active material layer 1013, and a first insulation layer 1015.

The first electrode plate 101 may be a positive electrode plate or a negative electrode plate. When the first electrode plate 101 is a positive electrode plate, the second electrode plate 103 is a negative electrode plate. When the first electrode plate 101 is a negative electrode plate, the second electrode plate 103 is a positive electrode plate. Correspondingly, the first current collector 1011 may be a positive current collector or a negative current collector. The first active material layer 1013 may be a positive active material layer or a negative active material layer.

The positive current collector may be an aluminum foil, or may be another type of current collector commonly used in the art. In some embodiments, the thickness of the current collector of the positive electrode plate may be 1 µm to 50 µm. In some embodiments, the current collector of the negative electrode plate may be at least one of a copper foil, a nickel foil, or a carbon-based current collector. In some embodiments, the thickness of the current collector of the negative electrode plate may be 1 µm to 50 µm.

The negative current collector may be a negative current collector commonly used in the art. The negative current collector may be made of a metal foil or a porous metal sheet or another material, for example, a foil or porous plate made of metal such as copper, nickel, titanium, or iron, or an alloy thereof, such as a copper foil. The positive active material layer is disposed on at least one surface of the positive current collector. The positive active material layer includes a positive active material. The positive active material includes a compound in which lithium ions can be intercalated reversibly and from which lithium ions can be deintercalated reversibly (that is, a lithiated intercalation compound). In some embodiments, the positive active material may include a lithium transition metal composite oxide. The lithium transition metal composite oxide contains lithium and at least one element selected from cobalt, manganese, or nickel. In some embodiments, the positive active material is at least one selected from: lithium cobalt oxide (LiCoO₂), lithium nickel-cobalt-manganese ternary material (NCM), lithium manganese oxide (LiMn₂O₄), lithium nickel manganese oxide (LiNi_{0.5}Mn_{1.5}O₄), or lithium iron phosphate (LiFePO₄).

The negative active material layer is disposed on at least one surface of the negative current collector. The negative active material layer contains a negative active material, and adopts a negative active material that is known in the art and capable of reversible deintercalation of active ions, without being limited in this application. For example, the negative active material may include, but is not limited to, one of or any combination of graphite, soft carbon, hard carbon, carbon fiber, mesocarbon microbeads, silicon-based material, tin-based material, lithium titanium oxide, or other metals that can combine with lithium into an alloy. The graphite may be one of or any combination of artificial graphite, natural graphite, or modified graphite. The silicon-based material may be one of or any combination of simplesubstance silicon, a silicon-oxygen compound, a silicon-carbon composite, a silicon alloy, or the like. The tin-based material may be one of or any combination of simplesubstance tin, a tin-oxide compound, a tin alloy, or the like.

The separator includes at least one of polyethylene, polypropylene, polyvinylidene fluoride, polyethylene terephthalate, polyimide, or aramid fiber. For example, the polyethylene includes at least one of high-density polyethylene, lowdensity polyethylene, or ultra-high-molecular-weight polyethylene. Especially the polyethylene and the polypropylene are highly effective in preventing short circuits, and improve stability of the battery through a turn-off effect. In some embodiments, the thickness of the separator is within a range of approximately 5 µm to 50 µm.

The first insulation layer 1015 is disposed on the first electrode plate 101, and can prevent transmission of electrons of the current collector at the position thereof to the first active material layer 1013. In some embodiments, the electronic conductivity of the first insulation layer 1015 is not higher than 1010 Ω·m.

The first insulation layer 1015 may include a first insulation material. The first insulation material includes at least one of aluminum oxide, zirconium oxide, or chrome oxide. In some embodiments, the first insulation material includes at least one of aluminum oxide ceramic, zirconium oxide ceramic, or chrome oxide ceramic. As an example, the first insulation material includes aluminum oxide ceramic. In some embodiments, the first insulation layer 1015 may further include a binder that bonds the first insulation material onto the first electrode plate 101 more firmly. The binder may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene.

An extension length of the first insulation layer 1015 along the width direction Y of the electrode plate is not greater than 10 mm. In some embodiments, the extension length of the first insulation layer 1015 is 2 mm to 10 mm, for example, 4 mm to 8 mm, 4 mm to 6 mm, or the like. In some embodiments, the extension length of the first insulation layer 1015 is not greater than 2 mm. Generally, the larger the extension length of the first insulation layer 1015 along the width direction Y of the electrode plate, the more effectively the voltage drop failure can be prevented. However, the first insulation layer 1015 occupies an internal space of the electrode assembly 10, thereby reducing the energy density of the electrode assembly 10. As found by the applicant of this application in experiments, when the extension length of the first insulation layer 1015 falls within the range of 2 mm to 10 mm, the hazard of voltage drop failure can be effectively prevented (for example, by 90% or more), and the impact on the energy density of the electrode assembly is within an acceptable range. Further, when the extension length of the first insulation layer 1015 is not greater than 2 mm, the hazard of voltage drop failure can be effectively prevented (for example, by approximately 70%), and the impact on the energy density of the electrode assembly 10 is insignificant.

The first current collector 1011 includes a first surface 1012 and a second surface 1014 that are disposed opposite to each other. The first active material layer 1013 is disposed on the first surface 1012. The first insulation layer 1015 is located between the first current collector 1011 and the first active material layer 1013.

The first current collector 1011 is overlaid with the first insulation layer 1015 first and then coated with the first active material layer 1013. The first insulation layer 1015 is disposed on the first electrode plate 101. A part that is of the first electrode plate 101 and overlaid with the first insulation layer 1015 is referred to as a region corresponding to the first insulation layer 1015. Correspondingly, the first current collector 1011 in this region is referred to as a current collector corresponding to the first insulation layer 1015, and the first active material layer 1013 in this region is referred to as an active material layer corresponding to the first insulation layer 1015. In the region corresponding to the first insulation layer 1015, the first insulation layer 1015 can prevent electrons from flowing from the corresponding current collector to the corresponding active material layer, thereby deenergizing the electrode plate in this region and improving the safety performance of the battery. In some embodiments, the first insulation layer 1015 is directly disposed on the first electrode plate 101. The active material layer usually contains ingredients of low adhesivity such as conductive agent and active materials. Therefore, the first insulation layer 1015 bonds more firmly to the first current collector 1011 than the active material layer, and is less likely to fall off.

As shown in FIG. 1, the electrode assembly 10 is formed by winding the first electrode plate 101, the second electrode plate 103, and the separator 105. The first surface 1012 is disposed toward a winding center of the electrode assembly 10 (briefly referred to as a winding center), and the second surface 1014 is disposed away from the winding center. The electrochemical device 100 further includes a second active material layer 1017 disposed on the second surface 1014. How to determine the winding center of the electrode assembly 10 is well known in the art and is not described here in detail.

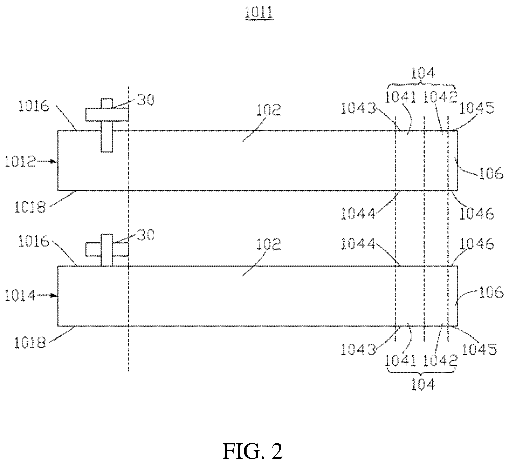

Referring to FIG. 2, the electrochemical device 100 further includes a tab 30 electrically connected to the first current collector 1011. The first current collector 1011 includes a first end 1016 and a second end 1018 that are disposed along a width direction Y of the electrode plate. The tab 30 is disposed at the first end 1016. The first current collector 1011 includes a first region 102 and a second region 104 that are disposed along a length direction X of the electrode plate.

In this application, the "end" of an element means a region formed by extending the edge of the element inward by 30%. For example, the first end 1016 of the first electrode plate 101 has a first edge, and the first end 1016 of the first electrode plate 101 means a region formed by extending the first edge toward the inner side of the first electrode plate 101 by 30%.

The second region 104 includes a first part 1041 and a second part 1042 that are disposed along the length direction X of the electrode plate. When being accommodated in an accommodation device (such as the accommodation device 50), the second part 1042 is accommodated in a deep pit of the accommodation device. For the description about the deep pit, refer to other relevant parts of this application.

The first part 1041 includes the first end 1043 of the first part and the second end 1044 of the first part that are disposed along the width direction Y of the electrode plate. The second part 1042 includes the first end 1045 of the second part and the second end 1046 of the second part that are disposed along the width direction Y of the electrode plate. The first insulation layer 1015 is at least disposed on at least one of the first end 1043 of the first part, the second end 1044 of the first part, the first end 1045 of the second part, or the second end 1046 of the second part.

Generally, the hazard of voltage drop failure is relatively high at the first end 1043 of the first part, the second end 1044 of the first part, the first end 1045 of the second part, or the second end 1046 of the second part when the separator 105 shrinks. The first insulation layer 1015 disposed at such positions can more effectively prevent the hazard of voltage drop failure and improve the safety performance of the electrochemical device.

In some embodiments, the first insulation layer 1015 is disposed at the first end 1043 of the first part, the second end 1044 of the first part, the first end 1045 of the second part, and the second end 1046 of the second part. In some embodiments, the first insulation layer 1015 is disposed at the first end 1043 of the first part and the second end 1044 of the first part. In some embodiments, the first insulation layer 1015 is disposed at the first end 1045 of the second part and the second end 1046 of the second part.

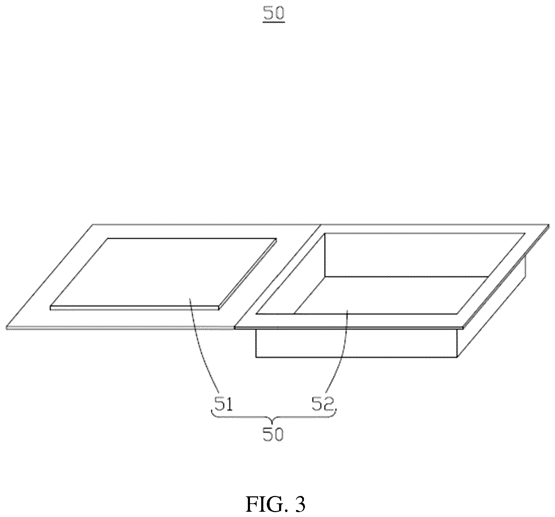

Referring to FIG. 3, the electrochemical device 100 further includes an accommodation device 50 configured to accommodate the electrode assembly 10. The accommodation device 50 includes a first accommodation portion 51 and a second accommodation portion 52. A depth of the first accommodation portion 51 is less than a depth of the second accommodation portion 52. The accommodation device 50 may be an aluminum plastic film commonly used in the art or the like, without being limited in this application.

As shown in FIG. 3, the depth of the first accommodation portion 51 and the depth of the second accommodation portion 52 are the extension lengths of the two accommodation portions along the M direction respectively.

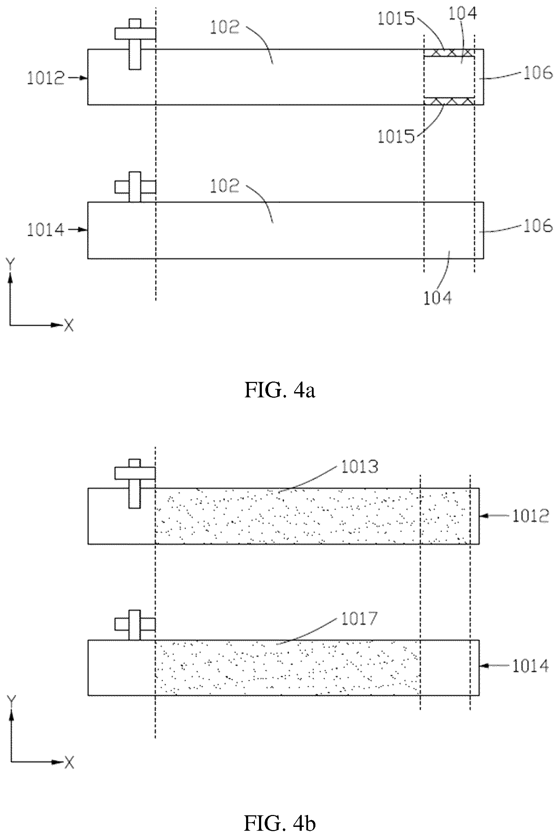

Referring to FIG. 2 and FIG. 4a, the first insulation layer 1015 is disposed at the first end 1043 of the first part, the second end 1044 of the first part, the first end 1045 of the second part, and the second end 1046 of the second part. The first electrode plate shown in FIG. 4a is further coated with an active material layer to obtain the first electrode plate shown in FIG. 4b. Referring to FIG. 4b, the first active material layer 1013 is disposed on the first surface 1012 of the first region 102 and the first surface 1012 of the second region 104. The second active material layer 1017 is disposed on the second surface 1014 of the first region 102.

The first region 102 is a double-side-coated region, where both the side oriented toward the winding center and the side oriented away from the winding center are coated with the active material layer. The second region 104 is a single-side-coated region, where the side oriented toward the winding center is coated with the active material layer, but the side oriented away from the winding center is not coated with the active material layer. The first electrode plate 101, the separator 105, and the second electrode plate 103 shown in FIG. 4b are wound to obtain a jelly-roll structure shown in FIG. 1.

The electrode assembly 10 shown in FIG. 1 is accommodated in the accommodation device 50. The first part 1041 is accommodated in at least the first accommodation portion 51, and the second part 1042 is accommodated in the second accommodation portion 52. A part of the first part 1041 is accommodated in the first accommodation portion 51. The first accommodation portion 51 overlays the part of the first part 1041. The part of the first part 1041 directly contacts the first accommodation portion 51 or contacts the first accommodation portion through an intermediate component. The second part 1042 is accommodated in the second accommodation portion 52. The second accommodation portion 52 overlays the second part 1042. The second part 1042 directly contacts the second accommodation portion 52 or contacts the first accommodation portion through an intermediate component. For ease of description in this application, that a part of the first part 1041 is accommodated in the first accommodation portion 51 may be briefly described as: the first part 1041 is accommodated in the first accommodation portion 51. Similarly, that the first accommodation portion 51 overlays a part of the first part 1041 may be briefly described as: the first accommodation portion 51 overlays the first part 1041. In this application, that a part of the first part 1041 contacts the first accommodation portion 51 may be briefly described as: the first part 1041 contacts the first accommodation portion 51.

The first part 1041 contacts the first accommodation portion 51, and the second part 1042 contacts the second accommodation portion 52. Correspondingly, in some embodiments, the first part 1041 and the second part 1042 are referred to as a shallow pit side and a deep pit side, respectively. Understandably, the first insulation layer 1015 disposed at the first end 1043 of the first part, the second end 1044 of the first part, the first end 1045 of the second part, and the second end 1046 of the second part is located in both the first accommodation portion 51 and the second accommodation portion 52. In a dropping process, the electrode assembly 10 drifts in the accommodation device 50. When the electrolytic solution impacts the separator 105 at the head part and end part of the electrode assembly 10 and causes the separator 105 to shrink, the first insulation layer 1015 can prevent electrons from flowing from the current collector to the active material layer, and therefore, the first electrode plate 101 in the region corresponding to the first insulation layer 1015 is deenergized. In this region, no short circuit occurs even if this region contacts the second electrode plate 103, thereby mitigating the hazard of voltage drop failure.

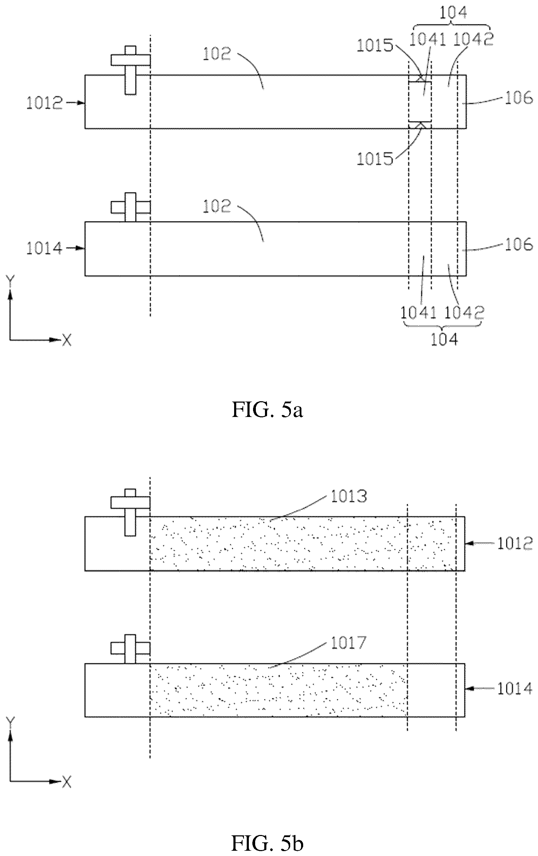

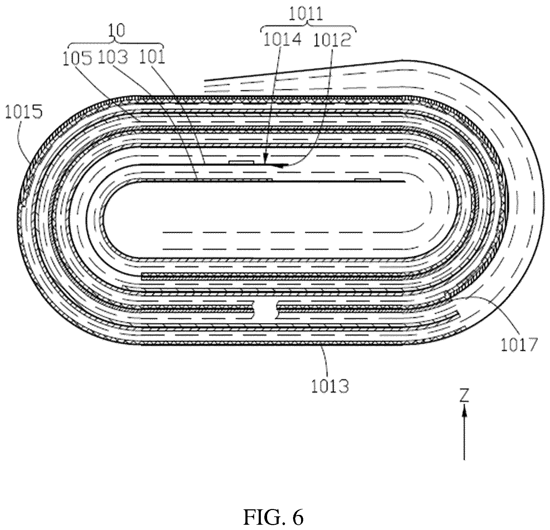

Referring to FIG. 2 and FIG. 5a, the first insulation layer 1015 is disposed at the first end 1043 of the first part and the second end 1044 of the first part. The first electrode plate shown in FIG. 5a is further coated with an active material layer to obtain the first electrode plate shown in FIG. 5b. Referring to FIG. 5b, the first active material layer 1013 is disposed on the first surface 1012 of the first region 102 and the first surface 1012 of the second region 104. The second active material layer 1017 is disposed on the second surface 1014 of the first region 102. The first electrode plate 101, the separator 105, and the second electrode plate 103 shown in FIG. 5b are wound to obtain a jelly-roll structure shown in FIG. 6.

When the electrode assembly 10 shown in FIG. 6 is accommodated in the accommodation device 50, a part of the first part 1041 contacts the first accommodation portion 51, and the second part 1042 contacts the second accommodation portion 52. Understandably, a part of the first insulation layer 1015 disposed at the first end 1043 of the first part and the second end 1044 of the first part is located in the first accommodation portion 51.

In another embodiment, the first insulation layer 1015 may be further disposed at the first end 1045 of the second part and the second end 1046 of the second part.

Further, the extension length of the first insulation layer 1015 along the width direction Y of the electrode plate is not greater than 10 mm. Preferably, the extension length of the first insulation layer 1015 along the width direction Y of the electrode plate falls within the range of 2 mm to 10 mm. Preferably, the extension length of the first insulation layer 1015 is not greater than 2 mm. Generally, the larger the extension length of the first insulation layer 1015 along the width direction Y of the electrode plate, the more effectively the voltage drop failure can be prevented. However, the first insulation layer 1015 occupies an internal space of the electrode assembly 10, thereby reducing the energy density of the electrode assembly 10. As found by the applicant of this application in experiments, when the extension length of the first insulation layer 1015 falls within the range of 2 mm to 10 mm, the hazard of voltage drop failure can be effectively prevented (for example, by 90% or more), and the impact on the energy density of the electrode assembly is within an acceptable range. Further, when the extension length of the first insulation layer 1015 is not greater than 2 mm, the hazard of voltage drop failure can be effectively prevented (for example, by approximately 70%), and the impact on the energy density of the electrode assembly 10 is insignificant.

In an embodiment, the electrochemical device 100 further includes a second insulation layer 1019 disposed on the second surface 1014. The second insulation layer 1019 is at least disposed on at least one of the first part 1041 or the second part 1042.

For the material composition of the second insulation layer 1019, refer to the material composition of the first insulation layer 1015, details of which are omitted here. In some embodiments, the second insulation layer 1019 and the first insulation layer 1015 include the same material that contains substantially the same content of ingredients. In this application, the content of an ingredient of a material in the insulation layer is a mass percent of the ingredient in the insulation layer. In this application, two values are referred to as being "substantially equal" or "substantially the same" when the rate of difference between the two values is within 20%. Understandably, depending on the test method, two values being "substantially equal" or "substantially the same" may mean that the rate of difference between the two values is within 15%, within 10%, within 5%, or the like instead. The rate of difference between two values is a ratio of an absolute value of a difference between the two values to the smaller of the two values. In some embodiments, the second insulation layer 1019 and the first insulation layer 1015 include different types of materials.

For the dimension settings of the second insulation layer 1019, refer to the dimension settings of the first insulation layer 1015, details of which are omitted here.

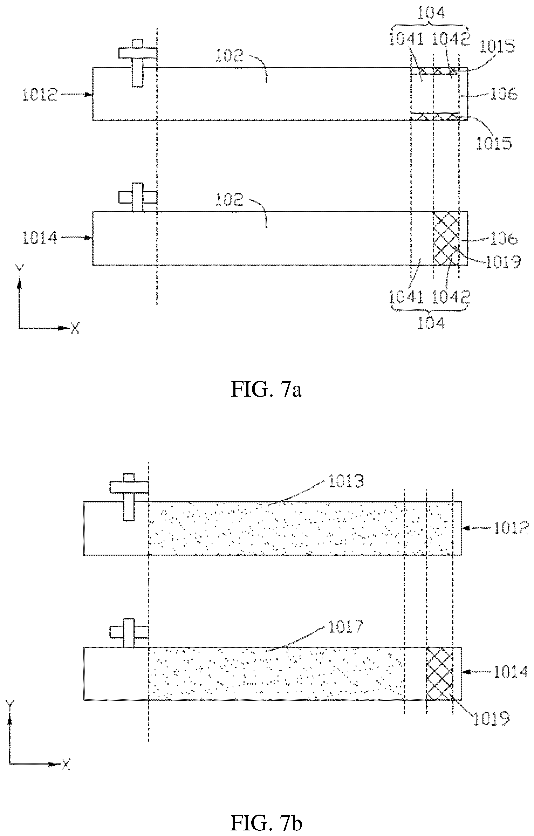

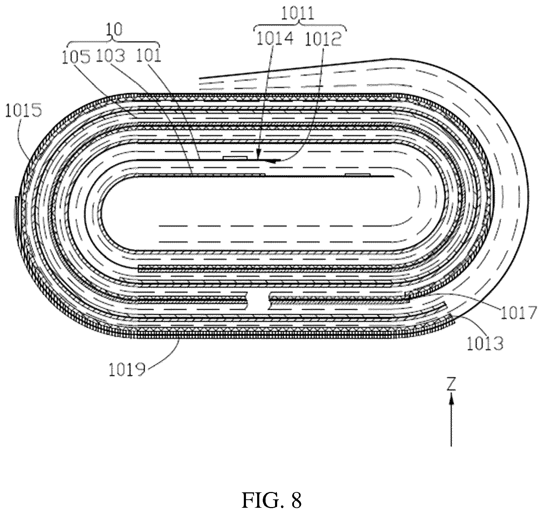

Referring to FIG. 7a, the electrochemical device 100 includes the first insulation layer disposed on the first surface 1012 and the second insulation layer 1019 disposed on the second surface 1014. The first insulation layer 1015 is disposed at the first end 1043 of the first part, the second end 1044 of the first part, the first end 1045 of the second part, and the second end 1046 of the second part. The second insulation layer 1019 is disposed at the second part 1042. The first electrode plate shown in FIG. 7a is further coated with an active material layer to obtain the first electrode plate shown in FIG. 7b. Referring to FIG. 7b, the first active material layer 1013 is disposed on the first surface 1012 of the first region 102 and the first surface 1012 of the second region 104. The second active material layer 1017 is disposed on the second surface 1014 of the first region 102. The first electrode plate 101, the separator 105, and the second electrode plate 103 shown in FIG. 7b are wound to obtain a jelly-roll structure shown in FIG. 8.

The electrode assembly 10 shown in FIG. 8 is accommodated in the accommodation device 50. The first insulation layer 1015 disposed at the first end 1043 of the first part, the second end 1044 of the first part, the first end 1045 of the second part, and the second end 1046 of the second part is located in both the first accommodation portion 51 and the second accommodation portion 52. The second insulation layer 1019 disposed at the second part 1042 is located in the second accommodation portion 52.

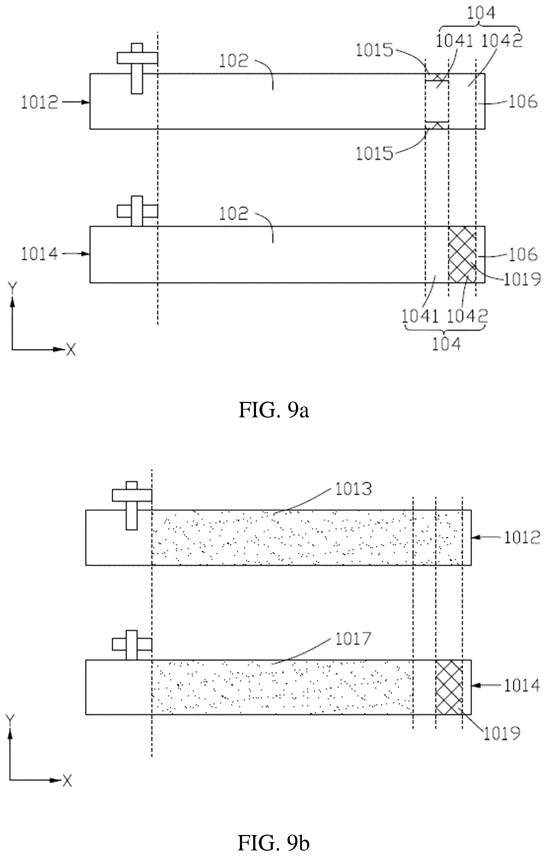

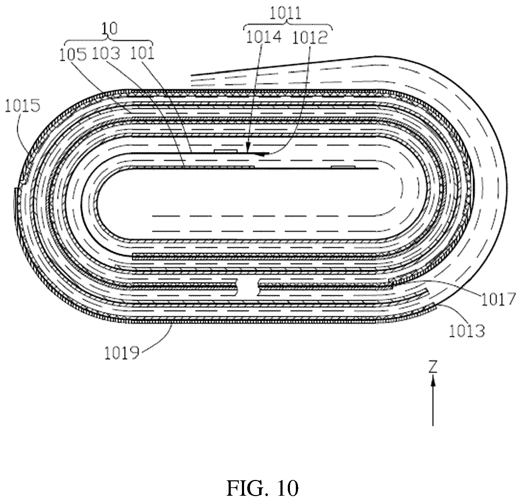

Referring to FIG. 9a, the first insulation layer 1015 is disposed at the first end 1043 of the first part and the second end 1044 of the first part. The second insulation layer 1019 is disposed at the second part 1042. The first electrode plate shown in FIG. 9a is further coated with an active material layer to obtain the first electrode plate shown in FIG. 9b. Referring to FIG. 9b, the first active material layer 1013 is disposed on the first surface 1012 of the first region 102 and the first surface 1012 of the second region 104. The second active material layer 1017 is disposed on the second surface 1014 of the first region 102. The first electrode plate 101, the separator 105, and the second electrode plate 103 shown in FIG. 9b are wound to obtain a jelly-roll structure shown in FIG. 10.

The electrode assembly 10 shown in FIG. 10 is accommodated in the accommodation device 50. The first insulation layer 1015 disposed at the first end 1043 of the first part and the second end 1044 of the first part is located in at least the first accommodation portion 51. The second insulation layer 1019 disposed at the second part 1042 is located in the second accommodation portion 52.

Understandably, the second insulation layer 1019 may be disposed at just the first part 1041, and the first insulation layer 1015 may be disposed at the first end 1043 of the first part and the second end 1044 of the first part, or disposed at the first end 1043 of the first part, the second end 1044 of the first part, the first end 1045 of the second part, and the second end 1046 of the second part.

Still referring to FIG. 2, the first current collector 1011 further includes a third region 106. The first region 102, the second region 104, and the third region 106 are disposed along the length direction X of the electrode plate. In an embodiment, the second insulation layer 1019 is further disposed in the third region 106. In some embodiments, the third region is an empty aluminum foil region of the first current collector 1011. Neither the first surface nor the second surface of the empty aluminum foil region is coated with the active material layer. In some embodiments, the second region 104 and the third region 106 are located at an end part of the first current collector 1011. In some embodiments, the end part of the first current collector 1011 is located at an outermost coil of the electrode assembly 10. In some embodiments, the end part of the first current collector 1011 is located at the outermost coil and a second-outermost coil of the electrode assembly 10.

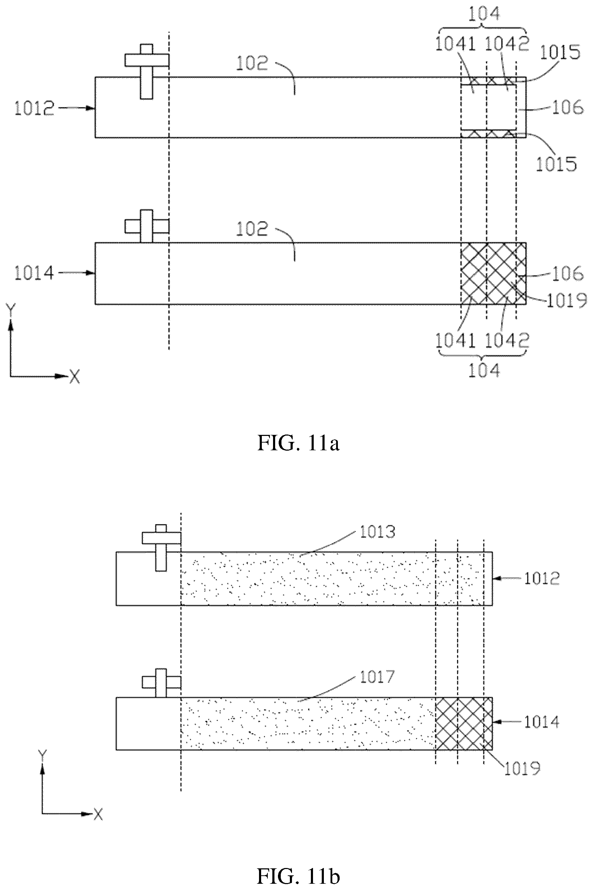

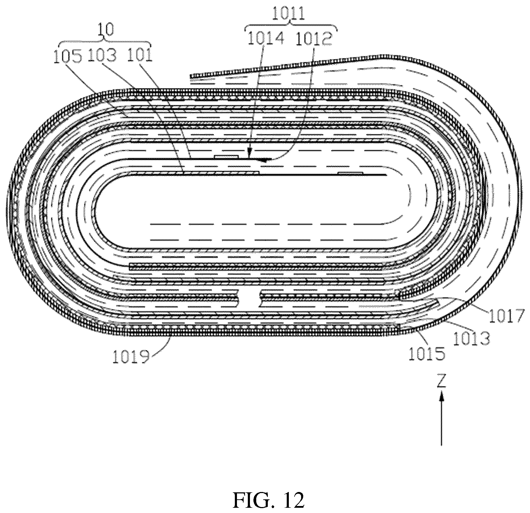

Referring to FIG. 11a, the first insulation layer 1015 is disposed at the first end 1043 of the first part, the second end 1044 of the first part, the first end 1045 of the second part, and the second end 1046 of the second part. The second insulation layer 1019 is disposed at the second region 104 and the third region 106. The first electrode plate shown in FIG. 11a is further coated with an active material layer to obtain the first electrode plate shown in FIG. 11b. Referring to FIG. 11b, the first active material layer 1013 is disposed on the first surface 1012 of the first region 102 and the first surface 1012 of the second region 104. The second active material layer 1017 is disposed on the second surface 1014 of the first region 102. The first electrode plate 101, the separator 105, and the second electrode plate 103 shown in FIG. 11b are wound to obtain a jelly-roll structure shown in FIG. 12.

The electrode assembly 10 shown in FIG. 12 is accommodated in the accommodation device 50. The first insulation layer 1015 disposed at the first end 1043 of the first part, the second end 1044 of the first part, the first end 1045 of the second part, and the second end 1046 of the second part is located in both the first accommodation portion 51 and the second accommodation portion 52. The second insulation layer 1019 disposed at the second region 104 and the third region 106 is located in both the first accommodation portion 51 and the second accommodation portion 52.

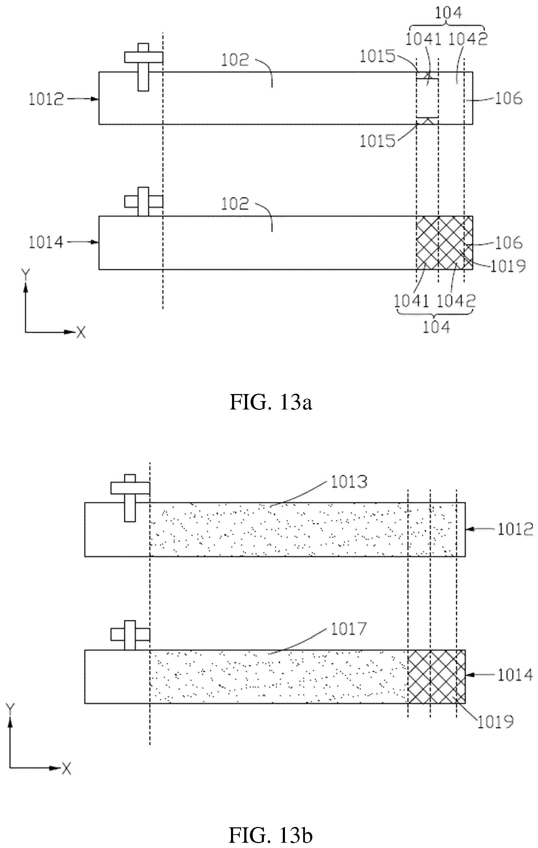

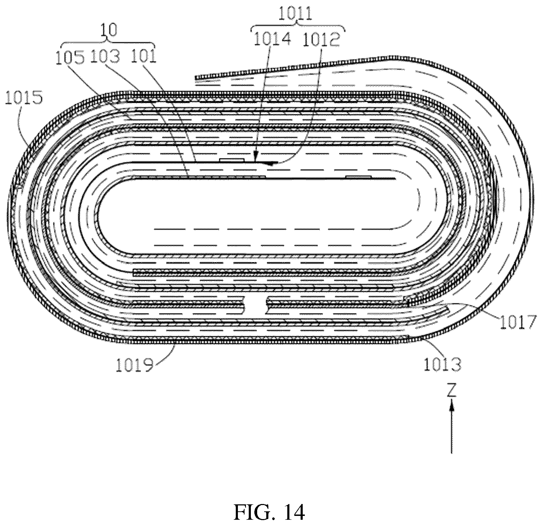

Referring to FIG. 13a, the first insulation layer 1015 is disposed at the first end 1043 of the first part and the second end 1044 of the first part. The second insulation layer 1019 is disposed at the second region 104 and the third region 106. The first electrode plate shown in FIG. 13a is further coated with an active material layer to obtain the first electrode plate shown in FIG. 13b. Referring to FIG. 13b, the first active material layer 1013 is disposed on the first surface 1012 of the first region 102 and the first surface 1012 of the second region 104. The second active material layer 1017 is disposed on the second surface 1014 of the first region 102. The first electrode plate 101, the separator 105, and the second electrode plate 103 shown in FIG. 13b are wound to obtain a jelly-roll structure shown in FIG. 14.

The electrode assembly 10 shown in FIG. 14 is accommodated in the accommodation device 50. The first insulation layer 1015 disposed at the first end 1043 of the first part and the second end 1044 of the first part is located in the first accommodation portion 51. The second insulation layer 1019 disposed at the second region 104 and the third region 106 is located in the second accommodation portion 52.

Further, the second insulation layer 1019 includes a second insulation material. The second insulation material includes at least one of aluminum oxide, zirconium oxide, or chrome oxide. In some embodiments, the second insulation material includes at least one of aluminum oxide ceramic, zirconium oxide ceramic, or chrome oxide ceramic.

Further, a ratio of the extension length of the second insulation layer 1019 along the width direction Y of the electrode plate to the extension length of the first current collector 1011 along the width direction Y of the electrode plate is not less than 50%.

In an embodiment, the first electrode plate 101 is a positive electrode plate, and the second electrode plate 103 includes a second current collector. Along the width direction Y of the electrode plate, the extension length (width) of the first current collector 1011 is less than the extension length (width) of the second current collector. Due to measurement errors, when the rate of difference between the width of the first current collector 1011 and the width of the second current collector is not greater than 5%, it is considered that the width is equal or substantially equal between the first current collector 1011 and the second current collector. A method for calculating the rate of difference is: rate of difference = (width of the second current collector - width of the first current collector 1011)/width of the first current collector 1011. Therefore, that the extension length of the first current collector 1011 along the width direction Y of the electrode plate is less than the extension length of the second current collector means: a rate of difference between the two extension lengths is greater than 5%, expressed as (the width of the second current collector - the width of the first current collector 1011)/the width of the first current collector 1011 > 5%, that is, the extension length of the first current collector 1011 along the width direction Y of the electrode plate is substantially less than the extension length of the second current collector along the width direction of the electrode plate. Such settings can prevent the hazard of voltage drop failure more effectively.

The following describes the reasons for such settings using an example.

The first insulation layer 1015 is disposed at the first end 1043 of the first part of the first electrode plate 101. Along the width direction Y of the electrode plate, the length of the first insulation layer 1015 is a. The first end 1043 of the first part of the first electrode plate 101 contains a first edge. The separator 105 exists between the first electrode plate 101 and the second electrode plate 103. No insulation layer is disposed at the first end of the second electrode plate 103. The first end of the second electrode plate 103 contains a second edge. When the extension length of the first current collector 1011 along the width direction Y of the electrode plate is substantially equal to the extension length of the second current collector along the width direction of the electrode plate, the first edge almost coincides with the second edge. This means that when the shrinkage distance of the separator 105 is greater than a, the first edge may contact the second edge so that voltage drop failure occurs on the electrode assembly 10. When the extension length of the first current collector 1011 along the width direction Y of the electrode plate is substantially less than the extension length of the second current collector along the width direction of the electrode plate, a distance between the first edge and the second edge along the width direction Y of the electrode plate is b. When the separator 105 between the first current collector 1011 and the second current collector shrinks, the first edge cannot contact the second electrode plate 103 to cause voltage drop failure of the electrode assembly 10 unless the shrinkage distance of the separator 105 is not less than the value of (a+b). Evidently, the hazard of voltage drop failure can be prevented more effectively by letting the extension length of the first current collector 1011 along the width direction Y of the electrode plate be substantially less than the extension length of the second current collector along the width direction Y of the electrode plate. Further, the first electrode plate 101 and the second electrode plate 103 may be prepared by a conventional method in the art. For example, the first active material layer 1013 and the second active material layer 1017 may be made of lithium cobalt oxide (LiCoO₂), conductive carbon black (Super P), polyvinylidene difluoride (PVDF), and N-methyl-pyrrolidone (NMP), and the like, without being limited in this application. The separator 105 may be a separator commonly used in the art, such as a polyethylene (PE) separator or a polypropylene (PP) separator, without being limited in this application.

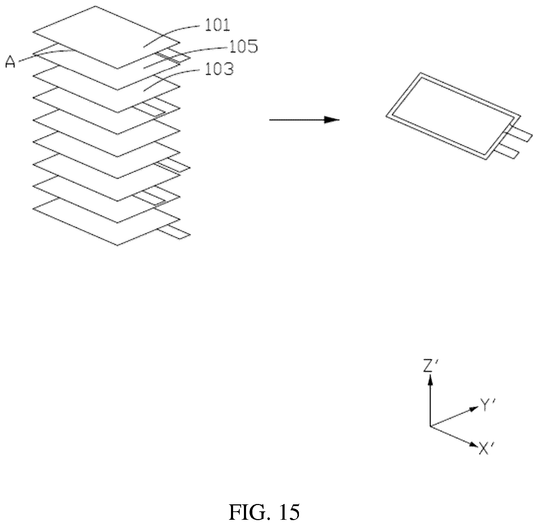

Referring to FIG. 15, instead, the electrode assembly 10 may be formed by stacking the first electrode plate 101, the second electrode plate 103, and the separator 105 along the first direction Z'. The first direction Z' is defined as the thickness direction of the electrode assembly 10. The second direction X' is perpendicular to the first direction Z', and the third direction Y' is perpendicular to the second direction X'. The second direction X' may be a length direction of the electrode plate in the stacked electrode assembly, or may be a width direction of the electrode plate. When the second direction X' is the length direction of the electrode plate in the stacked electrode assembly 10, the third direction Y' is the width direction of the electrode plate in the electrode assembly 10. When the second direction X' is the width direction of the electrode plate in the stacked electrode assembly, the third direction Y' is the length direction of the electrode plate in the electrode assembly.

For details of the first electrode plate 101, the second electrode plate 103, the separator 105, the first insulation layer 1015, and the second insulation layer 1019, refer to the description above, and the details are omitted here.

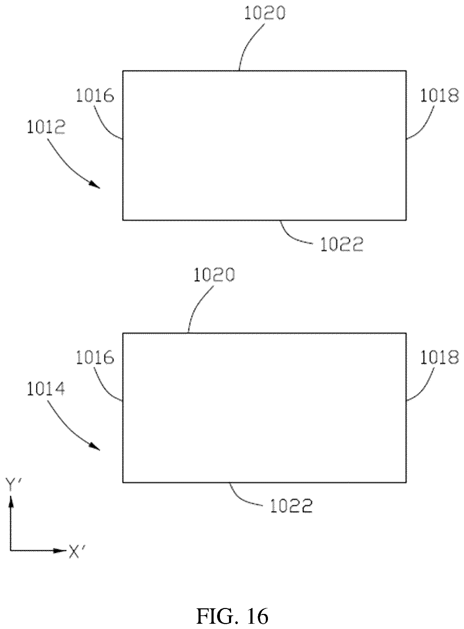

Referring to FIG. 16, the first current collector 1011 includes a first end 1016 and a second end 1018 that are disposed along the second direction X', and a third end 1020 and a fourth end 1022 that are disposed along the third direction Y'. The first insulation layer 1015 is disposed on at least one of the first end 1016, the second end 1018, the third end 1020, or the fourth end 1022.

In an embodiment, the electrochemical device 100 further includes a second insulation layer 1019 disposed on the second surface 1014. The second insulation layer 1019 is disposed on at least one of the first end 1016, the second end 1018, the third end 1020, or the fourth end 1022.

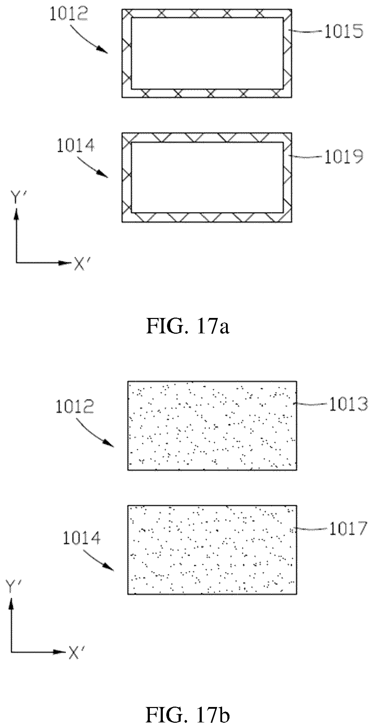

Referring to FIG. 17a, the first insulation layer 1015 is disposed at the first end 1016, the second end 1018, the third end 1020, and the fourth end 1022. The second insulation layer 1019 is disposed at the first end 1016, the second end 1018, the third end 1020, and the fourth end 1022. The first electrode plate shown in FIG. 17a is further coated with an active material layer to obtain the first electrode plate shown in FIG. 17b. Referring to FIG. 17b, the first active material layer 1013 is disposed on the first surface 1012, and the second active material layer 1017 is disposed on the second surface 1014. The first electrode plate 101, the separator 105, and the second electrode plate 103 shown in FIG. 17b are stacked to obtain the electrode assembly 10 shown in FIG. 15.

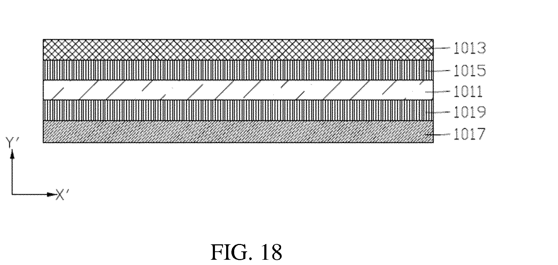

Refer to FIG. 18, which is an enlarged view of a part A in FIG. 15, where the part A is the fourth end 1022 of the first electrode plate 101. As shown in FIG. 18, along the third direction Z', the first electrode plate 101 includes a first current collector 1011, a first insulation layer 1015 and a second insulation layer 1019 that are disposed on two surfaces of the first current collector 1011 respectively, a first active material layer 1013 disposed on the first insulation layer 1015, and a second active material layer 1017 disposed on the second insulation layer 1019.

Further, the extension length of the first insulation layer 1015 along the second direction X' is not greater than 10 mm. Preferably, the extension length of the first insulation layer 1015 along the second direction X' falls within the range of 2 mm to 10 mm.

Further, the extension length of the second insulation layer 1019 along the second direction X' is not greater than 10 mm. Preferably, the extension length of the second insulation layer 1019 along the second direction X' falls within the range of 2 mm to 10 mm.

The following further describes this application with reference to specific embodiments and comparative embodiments.

### Embodiment 1

### (1) Preparing a positive electrode plate (the first electrode plate)

Coating the second region of the positive current collector (the first current collector) aluminum foil with a layer of 4 mm-wide strip-like aluminum oxide ceramic (the first insulation layer) to obtain the positive electrode plate shown in FIG. 4a.

Mixing lithium cobalt oxide (LiCoO₂) as a positive active material, conductive carbon black (Super P), and polyvinylidene difluoride (PVDF) at a mass ratio of 97.5: 1.0: 1.5, adding N-methyl-pyrrolidone (NMP) as a solvent, blending the mixture into a slurry with a solid content of 75%, and stirring the slurry evenly. Applying a coating of the slurry evenly onto the second region and the third region of the first surface that have been coated with the first insulation layer, drying at a temperature of 90 °C, and then applying a coating of the slurry onto the second region of the second surface. Performing, after completion of the coating, cold-pressing on the positive active material layer of the electrode plate until the compacted density reaches 4.0 g/cm³, and then performing auxiliary steps such as tab welding and tape sticking to finish the preparation process of the positive electrode plate.

### (2) Preparing a negative electrode plate

Mixing graphite (Graphite) as a negative active material, conductive carbon black (Super P), and styrene butadiene rubber (SBR) at a mass ratio of 96: 1.5: 2.5, adding deionized water as a solvent, blending the mixture into a slurry with a solid content of 70%, and stirring the slurry evenly. Coating the second current collector copper foil with the slurry evenly, where the weight of the negative effective material on the second electrode plate is 95 g/m². Drying at a temperature of 110 °C, thereby completing the single-sided coating of the negative electrode plate. Then coating the other side in the same way. Performing, after completion of the coating, cold-pressing on the negative active material layer of the electrode plate until the compacted density reaches 1.7 g/cm³. Then performing auxiliary steps such as tab welding and tape sticking to finish the preparation process of the double-side-coated negative electrode plate.

### (3) Preparing an electrolytic solution

Mixing ethylene carbonate (EC), ethyl methyl carbonate (EMC), and diethyl carbonate (DEC) at a mass ratio of EC: EMC: DEC = 30: 50: 20 in a dry argon atmosphere to form an organic solvent, then adding lithium salt hexafluorophosphate (LiPF₆) into the organic solvent to dissolve, and mixing the solution evenly to obtain an electrolytic solution in which a lithium salt concentration is 1.15 mol/L.

### (4) Preparing an electrochemical device

Using a 15 µm-thick polyethylene (PE) film as a separator, stacking the prepared positive electrode plate, separator, and negative electrode plate sequentially, and winding the plates to obtain the jelly-roll structure shown in FIG. 1, where the side that is of the positive electrode plate and coated with the first insulation layer is oriented to the winding center, and the other side is oriented away from the winding center. Placing the electrode assembly in an accommodation device (aluminum plastic film), where the first insulation layer is located in both the first accommodation portion (the shallow pit side) and the second accommodation portion (the deep pit side). Performing top-and-side sealing, electrolyte injection, and chemical formation (charging at a constant current of 0.02 C until the voltage reaches 3.3 V, and then charging at a constant current of 0.1 C until the voltage reaches 3.6 V) to obtain an electrochemical device of 90 mm in length, 66 mm in width, and 4.8 mm in thickness.

### Embodiment 2

This embodiment differs from Embodiment 1 in: the structure of the electrochemical device is a stacked structure, and the first end, the second end, the third end, and the fourth end of the positive electrode plate are all coated with a 4 mm-wide strip-like aluminum oxide ceramic layer (the first insulation layer). Other settings are the same as those in Embodiment 1, and are omitted here.

### Comparative Embodiment 1

This comparative embodiment differs from Embodiment 1 in that the preparation process of the positive electrode plate does not include the step of being coated with the first insulation layer. Other settings are the same as those in Embodiment 1, and are omitted here.

Performing a drop test on the electrochemical devices prepared in Embodiment 1, Embodiment 2, and Comparative Embodiment 1: Dropping a fully charged electrochemical device from a 1.2 m height onto a hard rubber board, and checking whether the electrochemical device is broken, leaking, deformed, or exploding. If none of the above consequences occurs, the drop test is passed. The test results are: All the 10 electrochemical devices in Embodiment 1 have passed the drop test, all the 10 electrochemical devices in Embodiment 2 have passed the drop test, and merely 5 of the 10 electrochemical devices in Comparative Embodiment 1 have passed the drop test.

The test results of the drop test show that the voltage drop failure caused by the drop of the electrochemical device in the embodiment group is suppressed significantly, and the insulation layer disposed between the current collector and the active material layer can effectively improve the performance such as suppressing the voltage drop failure caused by the drop of the electrochemical device.

In the electrochemical device and the electronic device according to this application, the insulation layer is disposed between the current collector and the active material layer to block up an electronic channel in this region. Even if the positive electrode plate contacts the negative electrode plate due to shrinkage of the separator, no short circuit occurs because the electrode plates in the insulation layer region are deenergized, thereby alleviating the problem of voltage drop failure. In addition, the electrical performance of the electrochemical device and the electronic device is not affected because the electrolyte content of the electrochemical device according to this application is not reduced.

What is described above is some specific embodiments of this application, but this application is not limited to the embodiments in practical applications. Other variations and modifications, which may be made by a person of ordinary skill in the art based on the technical conception of this application, fall within the protection scope of this application.

## Claims

1. An electrochemical device, comprising an electrode assembly, wherein the electrode assembly comprises a first electrode plate, a second electrode plate, and a separator located between the first electrode plate and the second electrode plate, **characterized in that** the first electrode plate comprises:
a first current collector, wherein the first current collector comprises a first surface and a second surface that are disposed opposite to each other;
a first active material layer and a first insulation layer that are disposed on the first surface, wherein the first insulation layer is located between the first current collector and the first active material layer.

2. The electrochemical device according to claim 1, **characterized in that** the electrode assembly is formed by winding the first electrode plate, the second electrode plate, and the separator, the first surface is disposed toward a winding center of the electrode assembly, and the second surface is disposed away from the winding center of the electrode assembly.

3. The electrochemical device according to claim 1, **characterized in that** the electrochemical device further comprises a second active material layer disposed on the second surface;
the first current collector comprises a first region and a second region that are disposed along a length direction of the electrode plate, and the first active material layer is disposed on the first surface of the first region and the first surface of the second region; and
the second active material layer is disposed on the second surface of the first region.

4. The electrochemical device according to claim 3, **characterized in that** the electrochemical device further comprises a tab electrically connected to the first current collector, wherein the first current collector comprises a first end and a second end that are disposed along a width direction of the electrode plate, and the tab is disposed at the first end; and
the second region of the first current collector comprises a first part and a second part that are disposed along the length direction of the electrode plate, the first part comprises a first end of the first part and a second end of the first part that are disposed along the width direction of the electrode plate, and the second part comprises a first end of the second part and a second end of the second part that are disposed along the width direction of the electrode plate; and
the first insulation layer is at least disposed on at least one of the first end of the first part, the second end of the first part, the first end of the second part, or the second end of the second part.

5. The electrochemical device according to claim 4, **characterized in that** the electrochemical device further comprises an accommodation device that accommodates the electrode assembly, the accommodation device comprises a first accommodation portion and a second accommodation portion, a depth of the first accommodation portion is less than a depth of the second accommodation portion, a first part of the electrode assembly is accommodated in at least the first accommodation portion, and a second part of the electrode assembly is accommodated in the second accommodation portion.

6. The electrochemical device according to claim 4, **characterized in that** the first insulation layer is disposed at the first end of the first part and the second end of the first part.

7. The electrochemical device according to claim 4, **characterized in that** the first insulation layer is disposed at the first end of the second part and the second end of the second part.

8. The electrochemical device according to claim 4, **characterized in that** the first insulation layer is disposed at the first end of the first part, the second end of the first part, the first end of the second part, and the second end of the second part.

9. The electrochemical device according to claim 3, **characterized in that** the electrochemical device further comprises a second insulation layer disposed on the second surface, the second region comprises a first part and a second part that are disposed along the length direction of the electrode plate, and the second insulation layer is at least disposed in at least one of the first part or the second part.

10. The electrochemical device according to claim 9, **characterized in that** the first current collector further comprises a third region; the first region, the second region, and the third region are disposed along the length direction of the electrode plate; and the second insulation layer is further disposed in the third region.

11. The electrochemical device according to claim 9, **characterized in that** the second region and the third region are located at an end part of the first current collector.

12. The electrochemical device according to claim 9, **characterized in that** the second insulation layer comprises a second insulation material, and the second insulation material comprises at least one of aluminum oxide, zirconium oxide, or chrome oxide.

13. The electrochemical device according to claim 9, **characterized in that** a ratio of an extension length of the second insulation layer along the width direction of the electrode plate to an extension length of the first current collector along the width direction of the electrode plate is not less than 50%.

14. The electrochemical device according to claim 1, **characterized in that** an extension length of the first insulation layer along a width direction of the electrode plate is not greater than 10 mm.

15. The electrochemical device according to claim 1, **characterized in that** the first insulation layer comprises a first insulation material, and the first insulation material comprises at least one of aluminum oxide, zirconium oxide, or chrome oxide.

16. The electrochemical device according to claim 1, **characterized in that** the first electrode plate is a positive electrode plate, the second electrode plate comprises a second current collector, and, along a width direction of the electrode plate, an extension length of the first current collector is less than an extension length of the second current collector.

17. The electrochemical device according to claim 1, **characterized in that** the electrode assembly is formed by stacking the first electrode plate, the second electrode plate, and the separator along a first direction, the first current collector comprises a first end and a second end that are disposed along a second direction, and a third end and a fourth end that are disposed along a third direction, the second direction is perpendicular to the first direction, the third direction is perpendicular to the second direction, and the first insulation layer is disposed on at least one of the first end, the second end, the third end, or the fourth end.

18. The electrochemical device according to claim 17, **characterized in that** an extension length of the first insulation layer along the second direction is not greater than 10 mm.

19. The electrochemical device according to claim 17, **characterized in that** the electrochemical device further comprises a second insulation layer disposed on the second surface, and the second insulation layer is disposed on at least one of the first end, the second end, the third end, or the fourth end.

20. The electrochemical device according to claim 19, **characterized in that** an extension length of the second insulation layer along the second direction is not greater than 10 mm.

21. An electronic device, **characterized in that** the electronic device comprises the electrochemical device according to any one of claims 1 to 19, and the electrochemical device supplies power to the electronic device.
